# EUROPÄISCHE PATENTANMELDUNG

(11) **EP 3 772 159 A1**
(43) Veröffentlichungstag der Anmeldung: **03.02.2021**
(21) Anmeldenummer: 20181823.4
(22) Anmeldetag: 24.06.2020
(51) Int. Cl.: H02K 7/00, H02K 7/116, H02K 9/19, B60K 7/00, B60K 17/04

(54) **ELEKTROMECHANISCHE ANTRIEBSEINHEIT, INSBESONDERE EINZELRADANTRIEBSEINHEIT**

(30) Priorität: 31.07.2019 DE 102019211436
(71) Anmelder: Robert Bosch GmbH, 70442 Stuttgart (DE)
(72) Erfinder: Lamparski, Christof, 82293 Mittelstetten (DE); Pech, Marco, 59427 Unna (DE); Schmeink, Markus, 44229 Dortmund (DE)

(57) **Zusammenfassung**

Die Erfindung betrifft eine elektromechanische Antriebseinheit, insbesondere Einzelradantriebseinheit, mit einem Elektromotor mit einem Motorgehäuse, an dem sich ein erster externer Kühlmittelanschluss und ein zweiter Kühlmittelanschluss eines ersten Kühlfluidpfads zum Durchfluss eines den Elektromotor kühlenden flüssigen Kühlmittels befinden, und mit einem mit dem Elektromotor zusammengebauten Getriebe mit einem Getriebegehäuse, in dem Zahnräder einer Untersetzungsstufe angeordnet sind, für die eine Ölschmierung vorgesehen ist, wobei das Getriebe an den Kühlfluidpfad des Elektromotors angeschlossen ist.

Eine effiziente Kühlung lässt sich auf einfache Weise dadurch erreichen, dass das Getriebe einen zweiten Kühlfluidpfad aufweist, der seriell an den ersten Kühlfluidpfad angeschlossen ist, und dass sich am Getriebegehäuse ein weiterer externer Kühlmittelanschluss und ein vierter Kühlmittelanschluss, über den der zweite Kühlfluidpfad an den zweiten Kühlmittelanschluss angeschlossen ist, befinden.

## Beschreibung

Die Erfindung betrifft eine elektromechanische Antriebseinheit, insbesondere Einzelradantriebseinheit, mit einem Elektromotor mit einem Motorgehäuse, an dem sich ein erster externer Kühlmittelanschluss und ein zweiter Kühlmittelanschluss eines ersten Kühlfluidpfads zum Durchfluss eines den Elektromotor kühlenden flüssigen Kühlmittels befinden, und mit einem mit dem Elektromotor zusammengebauten Getriebe mit einem Getriebegehäuse, in dem Zahnräder einer Untersetzungsstufe angeordnet sind, für die eine Ölschmierung vorgesehen ist, wobei das Getriebe an den Kühlfluidpfad des Elektromotors angeschlossen ist. Auch wenn der Elektromotor als Generator arbeiten kann, soll im Folgenden nur der Begriff "Elektromotor" verwendet werden.

Aus dem Datenblatt RD 77110, Ausgabe 02.2016 der Bosch Rexroth AG ist eine Einzelradantriebseinheit bekannt, die einen Hydraulikmotor und ein Kompaktgetriebe umfasst, das einen gestellfesten Getriebeträger, der eine durchgehende zentrale Ausnehmung hat, und ein Getriebe mit einem innenverzahntes Hohlrad, das außen auf dem Getriebeträger drehbar gelagert ist, mit vor der einen Stirnseite des Getriebeträgers angeordneten, außenverzahnten und mit dem Hohlrad kämmenden Zahnräder und mit einer Eingangssonnenwelle aufweist,. Der Hydraulikmotor ist in Einschubbauweise ausgeführt und teilweise in der zentralen Ausnehmung des Getriebeträgers aufgenommen. Antriebseinheiten dieser Art werden als Einzelradantriebseinheiten für rad- oder kettengetriebene Fahrzeuge und andere mobile Geräte verwendet. Darüber hinaus sind sie überall dort einsetzbar, wo etwas bewegt oder gedreht wird, zum Beispiel an Windentrommeln.

Es ist auch bekannt, ein Kompaktgetriebe mit einem Elektromotor zu einer elektromechanischen Antriebseinheit zu kombinieren. Um dabei eine ähnlich hohe Leistungsdichte wie beim Einsatz eines Hydraulikmotors zu erzielen, muss ein Elektromotor mit einer hohen Drehzahl größer 10000 Umdrehungen pro Minute betrieben werden. Zur Wandlung von Drehzahl und Drehmoment auf das Niveau eines Hydraulikmotors wird dem zur Verwendung mit einem Hydraulikmotor vorgesehenen Getriebe, das man als Hauptgetriebe bezeichnen kann, eine weitere Getriebestufe hinzugefügt.

Aus der DE 103 31186 A1 ist elektromechanische Antriebseinheit mit einem Elektromotor und mit einem mit diesem zusammengebauten Getriebe bekannt. Die weitere Getriebestufe ist dort innerhalb der zentralen Ausnehmung des Getriebeträgers angeordnet, wobei das Hohlrad der weiteren Getriebestufe fest und unverdrehbar in den Getriebeträger eingesetzt ist und die Zwischenräder als zwischen dem Hohlrad und einem Sonnenrad umlaufende Planetenräder an einem Planetensteg drehbar gelagert sind. Der Planetensteg bildet den Abtrieb der weiteren Getriebestufe und ist drehfest mit einer Eingangssonnenwelle des Hauptgetriebes gekoppelt.

Aufgrund der hohen Drehzahlen, die in der weiteren Getriebestufe vorherrschen, ist es von Vorteil, wenn die Verzahnung und zumindest manche Lager der weiteren Getriebestufe aktiv mit Schmieröl versorgt werden und das Getriebe gekühlt wird. In der DE 103 31186 A1 wird dieser Aspekt nicht weiter betrachtet.

Aus der DE 10 2014 220 309 A1 ist schon ein Getriebe bekannt, das als Planetengetriebe mit einem Hohlrad ausgebildet ist und bei dem Lager und die Verzahnungen von einer Pumpe mit Schmieröl versorgt werden, wobei die Pumpe als Kolbenpumpe in das Getriebe integriert ist und Schmieröl aus einem Ölsumpf ansaugt und in einen Schmierölpfad abgibt, aus dem das Schmieröl wieder in den Ölsumpf gelangt.

Eine elektromechanische Antriebseinheit mit den eingangs angeführten Merkmalen ist aus dem Artikel "Elektrischer Komplettantrieb als Fahreinheit oder als Ersatz für Hydraulikeinheiten" der ATZ offhighway, Ausgabe März 2015 bekannt. Für kritische Betriebsbedingungen mit hoher Umgebungstemperatur oder kritischen Lastprofilen kann das Getriebe an den Kühlkreislauf der Elektromaschine angeschlossen werden.

Der Erfindung liegt die Aufgabe zugrunde, eine elektromechanische Antriebseinheit mit einem Elektromotor mit einem Motorgehäuse, an dem sich ein erster externer Kühlmittelanschluss und ein zweiter Kühlmittelanschluss eines ersten Kühlfluidpfads zum Durchfluss eines den Elektromotor kühlenden flüssigen Kühlmittels befinden, und mit einem mit dem Elektromotor zusammengebauten Getriebe mit einem Getriebegehäuse, in dem Zahnräder einer Untersetzungsstufe angeordnet sind, für die eine Ölschmierung vorgesehen ist, wobei das Getriebe an den Kühlfluidpfad des Elektromotors angeschlossen ist, so auszubilden, dass auf einfache Weise eine effiziente Kühlung von Bauteilen des Getriebes erhalten wird.

Diese Aufgabe wird für eine elektromechanische Antriebseinheit mit den eben genannten Merkmalen dadurch gelöst, dass das Getriebe einen zweiten Kühlfluidpfad aufweist, der seriell an den ersten Kühlfluidpfad angeschlossen ist, und dass sich am Getriebegehäuse ein weiterer externer Kühlmittelanschluss und ein vierter Kühlmittelanschluss, über den der zweite Kühlfluidpfad an den zweiten Kühlmittelanschluss angeschlossen ist, befinden. Somit hat der Verwender einer erfindungsgemäßen elektromechanischen Antriebseinheit, zum Beispiel der Hersteller einer mobilen Arbeitsmaschine nur zwei Kühlmittelanschlüsse, nämlich einen Zulauf und einen Ablauf, die an einen Kühler anzuschließen sind. Als Kühlmittel dienen meist Wasser oder ein Wasser/Glykol-Gemisch

Eine erfindungsgemäße elektromechanische Antriebseinheit kann in vorteilhafter Weise weiter ausgestaltet werden.

Grundsätzlich ist es denkbar, dass sich der durch den Elektromotor führende Kühlfluidpfad stromab des durch das Getriebe führenden Fluidpfads befindet. Vorteilhafterweise befindet sich jedoch der durch den Elektromotor führende Kühlfluidpfad stromauf des durch das Getriebe führenden Kühlfluidpfads. Somit fließt das Kühlmittel mit einer niedrigen Temperatur in den ersten Kühlfluidpfad hinein und hält den Elektromotor auf einer niedrigen Temperatur, so dass der Elektromotor mit einem hohen Wirkungsgrad arbeitet. Für die Kühlung des Getriebes ist die Temperatur des vom ersten in den zweiten Kühlfluidpfad übertretenden Kühlmittels noch niedrig genug.

Für einen einfachen Zusammenbau von Elektromotor und Getriebe sowie für die Funktionssicherheit ist es günstig, wenn der zweite Kühlmittelanschluss am Elektromotor axial ausgerichtet ist, wobei auch der am Getriebe vorgesehene, vierte Kühlmittelanschluss axial ausgerichtet ist und wobei die beiden axial ausgerichteten Kühlmittelanschlüsse von Elektromotor und Getriebe axial ineinander steckbar sind. Prinzipiell können der zweite Kühlmittelanschluss am Elektromotor und der vierte Kühlmittelanschluss auch durch einen Schlauch miteinander verbunden sein.

Das Getriebegehäuse kann mehrteilig aufgebaut sein und als Bauteil ein Lagerteil aufweisen, an dem mindestens ein Zahnrad des Getriebes gelagert ist, wobei das Lagerteil direkt mit dem Kühlmittel in Kontakt steht und dadurch besonders effizient gekühlt wird.

Das mehrteilige Getriebegehäuse kann als Bauteil einen Befestigungsflansch für die Befestigung von Elektromotor und Getriebe aneinander aufweisen, wobei am Befestigungsflansch der weitere externe Kühlmittelanschluss und der vierte Kühlmittelanschluss ausgebildet sind. Der zweite Kühlfluidpfad verläuft also zumindest abschnittsweise im Befestigungsflansch oder am Befestigungsflansch entlang. Somit steht auch der Befestigungsflansch direkt mit dem Kühlmittel in Kontakt und wird dadurch besonders effizient gekühlt.

Vorteilhafterweise wird der zweite Kühlfluidpfad teilweise gemeinsam von dem Befestigungsflansch und dem Lagerteil gebildet. Er lässt sich dadurch besonders einfach realisieren. Außerdem stehen beide Bauteile auf einfache Art direkt mit dem Kühlmittel in Kontakt.

Besonders zweckmäßig ist es, wenn von dem Befestigungsflansch und dem Lagerteil gemeinsam ein Ringkanal gebildet wird, zu dem ein erster Kanal offen ist, der im Befestigungsflansch verläuft und den externen Kühlmittelanschluss des Getriebes mit dem Ringkanal verbindet, und zu dem ein zweiter Kanal offen ist, der im Befestigungsflansch verläuft und den vierten Kühlmittelanschluss mit dem Ringkanal verbindet. Somit ist durch den Ringkanal der Kühlfluidpfad im Getriebe vervollständigt, wobei sich die Kühlmittelanschlüsse an dem Befestigungsflansch befinden und durch den von Lagerteil und Befestigungsflansch gebildeten Ringkanal diese beiden Bauteile direkten Kontakt zum Kühlmittel haben. Es ist günstig, wenn der zweite Kanal dem ersten Kanal diametral gegenüberliegenden in den Ringkanal mündet. Denn dann fließt das Kühlmittel nicht nur hauptsächlich über den kurzen Weg vom einen Kanal zum anderen Kanal, sondern gleichmäßig über beide Teilbereiche des Ringkanals zwischen den Mündungen der Kanäle.

Es ist günstig, wenn ein Schmierölpfad, über den das mindestens eine sich am Lagerteil befindliche Lager für ein Zahnrad mit Schmieröl versorgt wird, durch den Befestigungsflansch und durch das Lagerteil führt. Der Befestigungsflansch und das Lagerteil erfüllen dabei auch die Funktion von Wärmetauschern zwischen dem Kühlmittel und dem Schmieröl, das somit seinerzeit die Lager und die Zahnkränze der Zahnräder nicht nur schmiert, sondern die Bauteile des Getriebes auch kühlt.

Der Schmierölpfad kann einen Ringkanal umfassen, der zwischen dem Befestigungsflansch und dem Lagerteil ausgebildet ist. Von dem Ringkanal können mehrere durch das Lagerteil führende Stichkanäle ausgehen, wobei jeder Stichkanal zu einem Lager von mehreren Lagern für Zahnräder führt.

Am Gehäuse können ein externer Anschluss für den Zufluss von Schmieröl und ein externer Anschluss zum Abfließen von Schmieröl aus einem Ölsumpf vorhanden sein.

Ein Ausführungsbeispiel einer erfindungsgemäßen elektromechanischen Antriebseinheit ist in den Zeichnungen dargestellt. Anhand der Figuren dieser Zeichnungen wird die Erfindung nun näher erläutert.

Es zeigen
- Figur 1: das Ausführungsbeispiel, wobei der Elektromotor in Seitenansicht und das Getriebe in einem axialen Schnitt gezeigt sind,
- Figur 2: in einem vergrößerten Maßstab einen Bereich des Getriebes in dem axialen Schnitt nach Figur 1,

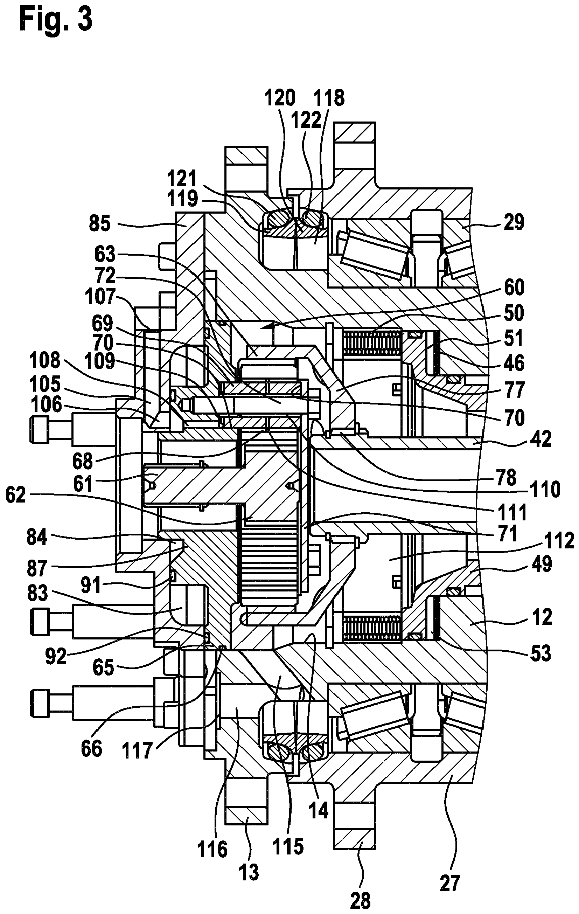

- Figur 3: denselben Bereich des Getriebes wie in Figur 2 in einem in einer anderen Ebene als in Figur 2 liegenden axialen Schnitt und
- Figur 4: einen Ausschnitt aus Figur 1 im Bereich der Verbindung des ersten Kühlfluidpfads und des zweiten Kühlfluidpfads.

Die gezeigte elektromechanische Antriebseinheit weist einen Elektromotor 9 mit einem Motorgehäuse 10, der auch als elektrischer Generator arbeiten kann, und ein Kompaktgetriebe 11 auf. Das Kompaktgetriebe umfasst einen Getriebeträger 12 mit einem Befestigungsflansch 13, mit dem der Getriebeträger 12 an dem nicht näher gezeigten Fahrgestell eines Fahrzeugs befestigt werden kann. Der Getriebeträger 12 ist ein Hohlkörper mit einer zentralen Ausnehmung 14, der außen und innen Wandabschnitte aufweist, die sich in ihren Durchmessern voneinander unterscheiden, und kann zusammen mit anderen fest mit ihm zusammengebauten Bauteilen als das Gehäuse des Kompaktgetriebes 11 aufgefasst werden.

Das Getriebe umfasst weiterhin eine Planetengetriebestufe 20 und eine zweite Getriebestufe 21. An einer Eingangssonnenwelle 22 ist einstückig das Sonnenrad 23 der Planetengetriebestufe 20 ausgebildet. Das Sonnenrad 23 kämmt mit mehreren außenverzahnten Planetenrädern 24, die in gleichen Abständen zueinander über Zylinderrollenlager drehbar auf Lagerzapfen 25 eines Planetensteges 26 gelagert sind. Die Planetenräder 24 kämmen außer mit dem Sonnenrad 23 noch mit einem innenverzahnten Hohlrad 27, das einen Befestigungsflansch 28 aufweist, mit dem es zum Beispiel an der Felge eines Rades, an einem Kettenrad, an einer Walzenbandage, an einer Windentrommel oder an einer Mischertrommel befestigt werden kann. Das Hohlrad 27 bildet somit den radseitigen Ausgang des Getriebes. Es ist mit Hilfe zweier in O-Anordnung eingebauter Kegelrollenlager 29 außen auf dem Getriebeträger 12, der von einer Stirnseite des Hohlrades 27 aus in dieses hineinragt, drehbar gelagert. An der anderen Stirnseite ist das Hohlrad 27 durch einen Deckel 30 verschlossen.

Der Planetensteg 26 ist mit einer Innenverzahnung 31 versehen, mit der er auf einem hülsenförmigen, mit einer Außenverzahnung 32 versehenen Zentralrad 33 steckt. Das Zentralrad 33 ist koaxial zur Eingangssonnenwelle 22 angeordnet.

An dem Getriebeträger 12 sind um die Eingangssonnenwelle 22 und das Zentralrad 33 herum mit gleichen Winkelabständen zueinander mehrere axial ausgerichtete Lagerzapfen ausgebildet, von denen jeder über eine zweireihige Wälzlageranordnung ein außenverzahntes Stirnrad 39 lagert, das sowohl mit dem Zentralrad 33 als auch mit dem Hohlrad 27 kämmt. Da die Lagerzapfen bezüglich des Getriebeträgers 12 eine feste Lage einnehmen, weist die zweite Getriebestufe 21 keine umlaufenden Planetenräder auf. Wegen der im Vergleich zur Planetengetriebestufe 20 ähnlichen Anordnung der Zahnräder zwischen einem Zentralrad und einem Hohlrad wird jedoch auch die zweite Getriebestufe oft als Planetengetriebestufe bezeichnet.

Die Eingangssonnenwelle 22, an deren einem Ende einstückig das Sonnenrad 23 ausgebildet ist, weist an ihrem anderen Ende eine Außenverzahnung 40 auf, mit der sie in eine Innenverzahnung 41 einer Mitnehmerhülse 42 eingesteckt ist. Mitnehmerhülse 42 und Eingangssonnenwelle 22 sind über die Verzahnungen drehfest miteinander gekoppelt. Im Bereich ihrer Innenverzahnung ist die Mitnehmerhülse 42 außen über ein Rillenkugellager 43 am Getriebeträger 12 drehbar gelagert.

Die zentrale Ausnehmung 14 des Getriebeträgers 12 hat Abschnitte mit verschiedenen Durchmessern, wobei sich das Rillenkugellager 43 in dem am weitesten innen liegenden und den kleinsten Durchmesser aufweisenden Abschnitt 44 befindet. Ohne Berücksichtigung eines Abschnitts, der einen nur geringfügig größeren Durchmesser als der Abschnitt 44 hat und axial relativ kurz ist, folgt dem Abschnitt 44 ein Abschnitt 45, der einen wesentlich größeren Durchmesser als der Abschnitt 44 hat und der in einer breiten Innenschulter 46 endet. Im Abschnitt 45 hat der Getriebeträger 12 über eine gewisse Länge eine Verzahnung, in die jede zweite Lamelle eines Lamellenpakets 47 einer Parkbremse 48 eingreift. Die andere Hälfte der Lamellen des Lamellenpakets 47 sind verdrehsicher mit der Mitnehmerhülse 42 gekoppelt.

Das Lamellenpaket 47 kann über einen in die eine Richtung hydraulisch betätigbaren, ringförmigen und gestuften Bremskolben 49 von einer Federanordnung 50 gegen die Innenschulter 46 des Getriebeträgers 12 gedrückt werden, wodurch die Parkbremse wirksam wird. Die Federanordnung 50 stützt sich über einen Sicherungsring am Getriebeträger 12 ab. Zwischen einer Außenschulter 51 des Bremskolbens 49 und der Innenschulter 46 des Getriebeträgers 12 ist ein Druckraum 53 gebildet, der über einen nicht näher gezeigten Fluidpfad im Getriebeträger 12 und ein hydraulisches Ventil mit Druck beaufschlagbar und von Druck entlastbar ist. Bei Beaufschlagung des Druckraums 53 mit Druck bewegt sich der Bremskolben 49 gegen die Federn der Federanordnung 50, so dass diese nicht mehr auf das Lamellenpaket wirken. Die Parkbremse ist gelöst. Wird der Druckraum 53 von Druck entlastet, so schiebt die Federanordnung das Lamellenpaket 47 zusammen und an die Innenschulter 46 des Getriebeträgers. Die Bremse ist betätigt.

Soweit es bisher beschrieben worden ist, ist das Getriebe dafür vorgesehen, um mit einem bis zu einer Außenschulter in die zentrale Ausnehmung 14 eingeschobenen Hydraulikmotor als Antriebsmotor benutzt zu werden. Die zentrale Ausnehmung 14, der Bremskolben 49 und die Federanordnung 50 sind so gestaltet, dass der Hydraulikmotor in der Ausnehmung 14 aufgenommen werden kann.

Um das Getriebe in seinem bisher beschriebenen Aufbau zusammen mit einem Elektromotor verwenden zu können und um dabei eine Leistungsdichte zu erzielen, die ähnlich groß wie bei der Verwendung eines Hydraulikmotors ist, weist das Getriebe zusätzlich eine Getriebevorstufe 60 auf, die in der zentralen Ausnehmung 14 untergebracht ist. Aufgrund einer derartigen Anordnung wird trotz dem Vorhandensein der Getriebevorstufe 60 das Getriebe in axialer Richtung nicht größer.

Die Getriebevorstufe 60 weist an einer Vorstufeneingangswelle 61 ein außenverzahntes Zentralrad 62, ein Vorstufenhohlrad 63, das den Abtrieb der Getriebevorstufe 60 darstellt und mehrere, beispielsweise fünf Vorstufenzwischenräder 64 auf, die zwischen dem Zentralrad 62 und dem Vorstufenhohlrad 63 angeordnet sind, gleiche Winkelabstände voneinander haben und sowohl mit dem Zentralrad 62 als auch mit dem Vorstufenhohlrad 63 kämmen. Die Vorstufeneingangswelle 61 ist außen über einen Teil ihrer Länge mit einer Steckverzahnung versehen, mit der sie in eine in einer axialen Sackbohrung mit einer inneren Steckverzahnung versehenen Antriebswelle 59 des Elektromotors 9 eingesteckt ist.

Die Vorstufenzwischenräder 64 werden von einem Lagerteil 65 getragen, das plattenförmig ausgebildet und in die zentrale Ausnehmung 14 des Getriebeträgers 12 eingesetzt ist, wobei ein äußerer ringförmiger Abschnitt des Lagerteils 65 in einer Senkung des Getriebeträgers 12 aufgenommen ist und mit der Stirnseite des Getriebeträgers fluchtet. Durch eine Radialdichtung 66 ist der Spalt zwischen dem Getriebeträger 12 und dem Lagerteil 65 abgedichtet. Die Drehmomentübertragung zwischen dem Lagerteil 65 und dem Getriebeträger 12 erfolgt über zwei Passstifte, die außerhalb der Schnittebene der Figuren angeordnet und deshalb in den Figuren nicht zu erkennen sind.

Die Vorstufenzwischenräder 64 sind über zwei Nadelkränze 68 auf als Hohlbolzen 69 ausgebildeten Lagerzapfen drehbar gelagert, die in Senkungen 70 des Lagerteils 65 zentriert sind. Auf der dem Lagerteil 65 abgewandten Seite der Vorstufenzwischenräder 64 ist eine Zwischenräderplatte 71 angeordnet, die ebenfalls Senkungen 70 zum Eintauchen der Hohlbolzen 69 aufweist und mit den Hohlbolzen als Abstandshalter mit durch sie und die Hohlbolzen hindurchgehenden und in das Lagerteil 65 eingeschraubten Maschinenschrauben 72 am Lagerteil 65 befestigt ist. Die Zwischenräderplatte 71 ist kein Ring, sondern ist ohne zentrale Öffnung, so dass die Vorstufeneingangswelle 61 axial an die Zwischenräderplatte anlaufen kann. Auch die Mitnehmerhülse 42 kann axial an die Zwischenräderplatte 71 anlaufen.

Das Vorstufenhohlrad 63 ist schalenförmig mit einem Boden 77 ausgebildet, in dem sich eine zentrale Öffnung 78 befindet. Der Rand der zentralen Öffnung ist mit einer Innenverzahnung 79 versehen, mit der das Vorstufenhohlrad 63 auf die außenverzahnte Mitnehmerhülse 42 aufgesteckt ist. Damit ist das Vorstufenhohlrad 63 über die Mitnehmerhülse 42 drehfest mit der Eingangssonnenwelle 22 derart gekoppelt, dass das Vorstufenhohlrad 63 und die Eingangssonnenwelle 22 die gleiche Drehzahl haben. Durch zwei in die Mitnehmerhülse 42 eingesetzte Sicherungsringe 80 ist die axiale Position des Vorstufenhohlrads 63 relativ zur Mitnehmerhülse festgelegt.

Das Kompaktgetriebe 11 und der Elektromotor 9 sind mit Hilfe eines Befestigungsflansches 85 aneinander befestigt, der auf der Stirnseite des Getriebeträgers 12 aufliegt und mit Schrauben 86 an dem Getriebeträger festgeschraubt ist und wie das Lagerteil 65 einen zentralen Durchgang für die miteinander verbundenen Wellen 59 und 61 hat. Das Lagerteil 65 ist axial zwischen dem Befestigungsflansch 85 und dem Getriebeträger gehalten. Zentral taucht es mit einem gestuften, ringförmigen Vorsprung 87 in den Befestigungsflansch 85 ein. Es liegt mit zwei ringförmigen Flächenabschnitten 88 und 89, die radial und axial voneinander beabstandet sind, axial an dem Befestigungsflansch 65 an. Zudem liegt das Lagerteil 65 mit einem schmalen inneren Kragen 90 radial an dem Befestigungsflansch 85 an. Dadurch werden zwischen dem Befestigungsflansch 85 und dem Lagerteil 65 zwei in radialer Richtung voneinander beabstandete Ringkanäle 83 und 84 gebildet, die durch einen Axialdichtring 91 gegeneinander abgedichtet sind. Außerhalb des äußeren Ringkanals 83 ist der Spalt zwischen dem Lagerteil 65 und dem Befestigungsflansch 85 durch einen weiteren Axialdichtring 92 abgedichtet. Der innere Ringkanal 84 ist abgesehen von einem nicht zu vermeidenden Ringspalt nach innen dadurch abgedichtet, dass das Lagerteil 65 mit seinem Kragen 90 radial am Befestigungsflansch 85 anliegt.

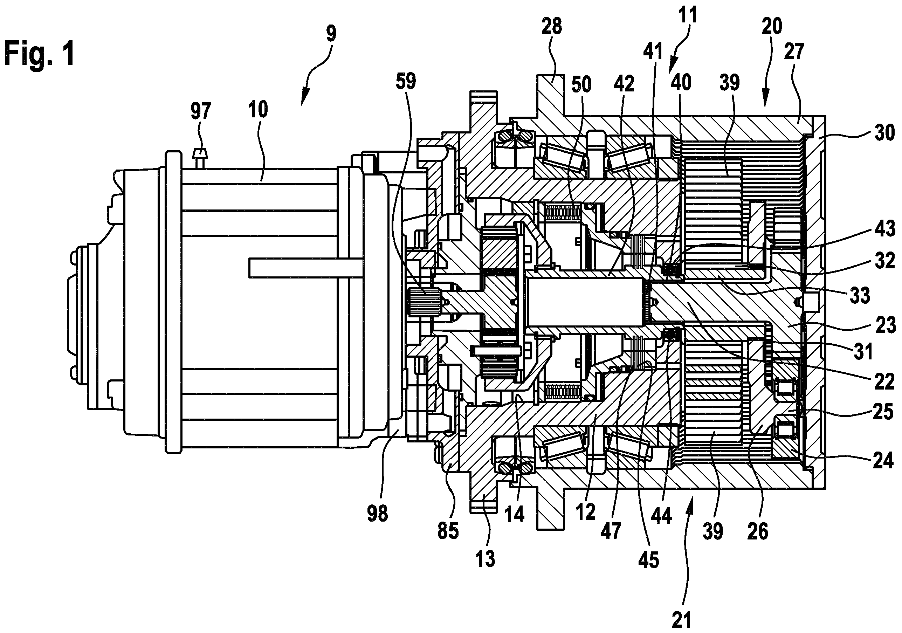

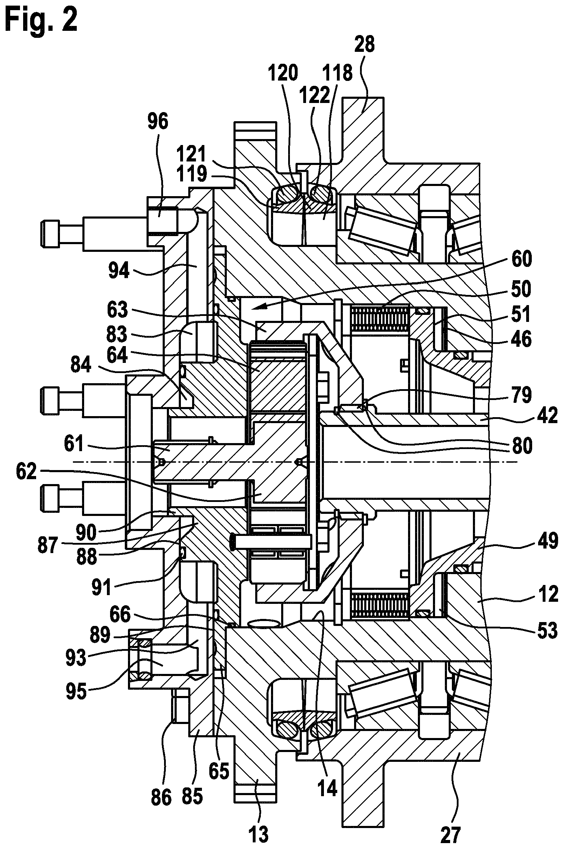

In den Ringkanal 83 münden an einander diametral gegenüberliegenden Stellen zwei Radialbohrungen 93 und 94, die in den Figuren 1 und 2 vereinfacht als Sackbohrungen gezeichnet sind, in der Realität jedoch von außen gebohrt und damit zunächst nach außen offen sind, dann aber durch einen Stopfen verschlossen werden. In die Radialbohrung 93 mündet als Kühlmittelanschluss 95 am Getriebe eine axial, also in Richtung der Drehachse der Teile 61, 42 und 22 des Getriebes und der Antriebswelle des Elektromotors ausgerichtete Anschlussöffnung. In die Radialbohrung 94 mündet als externer Kühlmittelanschluss 96 am Getriebe eine ebenfalls axial ausgerichtete Anschlussöffnung.

Auch der Elektromotor 9 hat Kühlmittelanschlüsse, und zwar einen externen Kühlmittelanschluss 97 und einen zweiten Kühlmittelanschluss 98. Dieser zweite Kühlmittelanschluss 98 erstreckt sich wie der Kühlmittelanschluss 95 am Getriebe, der als vierter Kühlmittelanschluss betrachtet sei, in axialer Richtung. In den Kühlmittelanschluss 98 ist ein Anschlussstutzen 99 eingesteckt, der bei der Montage von Elektromotor 9 und Getriebe 11 aneinander in den vierten Kühlmittelanschluss 95 eintaucht. Durch eine Dichtanordnung 100 wird die Kühlmittelverbindung zwischen dem Elektromotor und dem Getriebe abgedichtet.

Im Gebrauch ist der externe Kühlmittelanschluss 97 am Elektromotor an eine Kühlmittelquelle, zum Beispiel an den Vorlauf eines Betriebswassernetzes angeschlossen. Der externe Kühlmittelanschluss 96 am Getriebe ist an den Rücklauf des Betriebswassernetzes angeschlossen. Wasser als Kühlmittel fließt dann dem externen Kühlmittelanschluss 97 des Elektromotors 9 zu, durchfließt das Kühlkanalsystem im Elektromotor und strömt über den zweiten Kühlmittelanschluss 98 am Elektromotor und den vierten Kühlmittelanschluss 95 am Getriebe in das Getriebe über und gelangt über die Radialbohrung 93, den Ringkanal 83 und die Radialbohrung 94 zum externen Kühlmittelanschluss 96 am Getriebe 11 und von dort zurück ins Betriebswassernetz. Auf seinem Weg kühlt das Wasser den Elektromotor sowie das Lagerteil 65 und den Befestigungsflansch 85 des Getriebes 11, wobei in dem Ringkanal 83 das Kühlwasser in direktem Kontakt auch zum Lagerteil 65 steht.

Bei dem gezeigten Kompaktgetriebe 11 werden die Nadelkränze 68 im Betrieb über einen Schmierölpfad gezielt mit Schmieröl versorgt. Zu diesem Schmierölpfad gehört der Ringkanal 84, der über zwei in dem Befestigungsflansch 85 rechtwinklig zueinander verlaufende Bohrungen, nämlich eine Radialbohrung 105 und eine Axialbohrung 106 mit einem radial ausgerichteten Schmierölanschluss 107 am Befestigungsflansch 85 verbunden ist, dem von einer externen Pumpe Schmieröl zugeführt wird. Über jeweils eine Stichbohrung 108 in dem Lagerteil 65 ist der Ringkanal 84 mit einem Freiraum 109 vor einem Hohlbolzen 69 fluidisch verbunden. Von dem Freiraum gelangt das Schmieröl über einen Spalt 110 zwischen einer Maschinenschraube 72 und einem Hohlbolzen 69 sowie über eine Radialbohrung 111 im Hohlbolzen an die Nadelkränze 68. Von den Nadelkränzen aus gelangt das Schmieröl in den Innenraum 112 des Getriebeträgers 12 und an dessen tiefste Stelle.

Über zwei in den Getriebeträger 12 eingebrachte und aufeinandertreffende Bohrungen, nämlich eine Schrägbohrung 115, die von dem Innenraum ausgeht, und eine Axialbohrung 116, deren einen weiteren Schmierölanschluss darstellende Mündung 117 in einem vom Lagerteil 65 und vom Befestigungsflansch 85 nicht überdeckten Bereich der Stirnseite des Getriebeträgers liegt, kann das Schmieröl aus dem Innenraum 112 des Getriebeträgers 12 ablaufen oder abgesaugt werden. Die Mündung der Schrägbohrung 115 in den Innenraum 112 befindet sich bei horizontaler Ausrichtung eines Fahrzeugs an der in Richtung der Schwerkraft tiefsten Stelle des Innenraums 112. Damit ist sichergestellt, dass sich im Gehäuse kein Schmieröl ansammelt und die Zahnräder der Getriebevorstufe 60 nicht in einem Ölsumpf laufen, so dass Planschverluste vermieden werden. Die Zahnkränze der Zahnräder werden vielmehr dadurch geschmiert und gekühlt, dass das Schmieröl, das den Lagern der Vorstufenzwischenräder 64 zugeführt wird, aufgrund von Fliehkräften an den Stirnseiten der Vorstufenzwischenräder nach außen wandert und dadurch an die Zahnkränze und über diese in den Innenraum 112 des Getriebeträgers 12 gelangt.

Sollen aus irgendwelchen Gründen das Hohlrad und die Vorstufenzwischenräder 64 in einen Ölsumpf eintauchen, so kann die Antriebseinheit in einer solchen Lage bezüglich der Mittelachse des Elektromotors und des Getriebes an einem Fahrzeug positioniert werden, dass sich die Mündung der Schrägbohrung 115 nicht an der in Richtung der Schwerkraft tiefsten Stelle des Innenraums 112, sondern auch noch bei üblicher Schrägstellung eines Fahrzeugs soweit über der tiefsten Stelle des Innenraums 112 befindet, dass das Ölniveau im Ölsumpf so hoch ist, dass die Zahnkränze des Vorstufenhohlrads 63 und der Vorstufenzwischenräder 64 in den Ölsumpf eintauchen.

Der durch das Getriebe führende Schmierölpfad führt also von dem Schmierölanschluss 107 durch den Befestigungsflansch 85, das Lagerteil 65 und den Getriebeträger 12 hindurch zum Schmierölanschluss 117. In den wassergekühlten Teilen 65 und 85 geht vom Schmieröl Wärme auf das Wasser über, so dass das Schmieröl gekühlt wird und gekühltes Schmieröl die Lager und Zahnkränze benetzt. Innerhalb des Getriebes werden die zulässigen Temperaturen nicht überschritten. Der Getriebeträger 12 wird auch durch den direkten Kontakt mit dem Befestigungsflansch 85 und mit dem Lagerteil 65 gekühlt. Der Befestigungsflansch 85 stellt also neben deinem Adapter zur Befestigung von Elektromotor und Getriebe aneinander zugleich auch einen Wärmetauscher und einen Kühlkörper dar. Zur Verbesserung der Kühlfunktion kann er auch mit Rippen oder Platten versehen sein.

Die Schrägbohrung 115 und die Axialbohrung 116 sind zu einem Ringraum 118 zwischen dem Getriebeträger 12 und dem Hohlrad 27 hin offen, der durch eine dynamische Dichtungsanordnung nach außen abgedichtet ist. Die Dichtungsanordnung besteht aus zwei formstabilen Axialdichtringen 119 und 120, von denen einer dem Getriebeträger 12 und der andere dem Hohlrad 27 zugeordnet ist und die unter Bildung eines keilförmigen, radial nach außen enger werdenden Spaltes axial aneinander anliegen, und zwei Elastomerdichtringen 121 und 122, von denen einer radial zwischen dem Axialdichtring 119 und dem Getriebeträger 12 und der andere radial zwischen den Axialdichtring 120 und dem Hohlrad 27 angeordnet ist. Aufgrund der Anbindung des Ringraums 118 an den Schmierölkreislauf werden auch die sich relativ zueinander drehenden Anlageflächen der Axialdichtringe 119 und 120 geschmiert. Außerdem gelangt Schmieröl ohne weiteres auch zu den Kegelrollenlagern 29, die im Anschluss an den Ringraum 118 zwischen dem Getriebeträger 112 und dem Hohlrad 27 angeordnet sind.

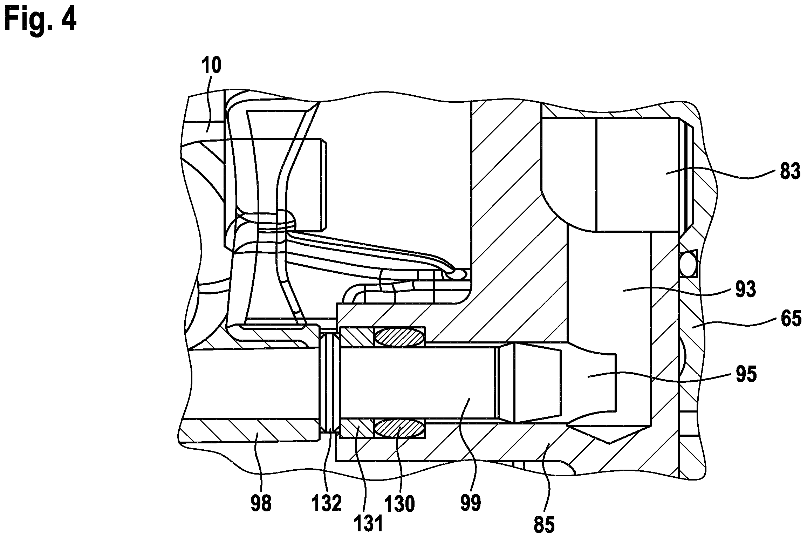

Wie die Figur 4 näher zeigt, befindet sich in einen erweiterten Endabschnitt des Kühlmittelanschlusses 95 am Befestigungsflansch 85 ein Elastomerdichtring 130, der von einem Klemmring 131 axial an einer Schulter in dem Kühlmittelanschluss 95 gehalten wird. Der Anschlussstutzen 99 hat am Außenumfang einen Bund 132 und ist bis zur Anlage dieses Bundes am Motorgehäuse 10 in eine Bohrung des Motorgehäuses 10 eingesteckt. Die Elastomerdichtring 130 und der Klemmring 131 sind so ausgeführt, dass sie vor der Montage von Elektromotor 9 und Getriebe 11 aneinander auf den Anschlussstutzen 99 aufgeschoben werden können. Bei der Montage gelangen die Elastomerdichtring 130 und der Klemmring 131 dann in den erweiterten Endabschnitt des Kühlmittelanschlusses 95.

### Bezugszeichenliste

- 9: Elektromotor
- 10: Motorgehäuse
- 11: Kompaktgetriebe
- 12: Getriebeträger
- 13: Befestigungsflansch an 12
- 14: zentrale Ausnehmung in 12
- 20: Planetengetriebestufe
- 21: zweite Getriebestufe
- 22: Eingangssonnenwelle
- 23: Sonnenrad
- 24: Planetenräder
- 25: Lagerzapfen
- 26: Planetensteg
- 27: Hohlrad
- 28: Befestigungsflansch an 27
- 29: Kegelrollenlager
- 30: Deckel an 27
- 31: Innenverzahnung an 26
- 32: Außenverzahnung an 33
- 33: Zentralrad
- 39: Stirnrad
- 40: Außenverzahnung an 22
- 41: Innenverzahnung an 42
- 42: Mitnehmerhülse
- 43: Rillenkugellager
- 44: Abschnitt von 14
- 45: Abschnitt von 14
- 46: Innenschulter in 14
- 47: Lamellenpaket
- 48: Parkbremse
- 49: Bremskolben
- 50: Federanordnung
- 51: Außenschulter von 49
- 53: Druckraum
- 59: Antriebswelle von 9
- 60: Getriebevorstufe
- 61: Vorstufeneingangswelle
- 62: Zentralrad
- 63: Vorstufenhohlrad
- 64: Vorstufenzwischenräder
- 65: Lagerteil
- 66: Radialdichtung
- 68: Nadelkranz
- 69: Hohlbolzen
- 70: Senkungen in 65 und 71
- 71: Zwischenräderplatte
- 72: Maschinenschrauben
- 77: Boden von 63
- 78: zentrale Öffnung in 77
- 79: Innenverzahnung in 78
- 80: Sicherungsringe
- 83: Ringkanal
- 84: Ringkanal
- 85: Befestigungsflansch
- 86: Schrauben
- 87: ringförmiger Vorsprung an 65
- 88: ringförmiger Flächenabschnitt an 65
- 89: ringförmiger Flächenabschnitt an 65
- 90: Kragen an 65
- 91: Axialdichtring
- 92: Axialdichtring
- 93: Radialbohrung
- 94: Radialbohrung
- 95: Kühlmittelanschluss
- 96: externer Kühlmittelanschluss
- 97: externer Kühlmittelanschluss
- 98: Kühlmittelanschluss
- 99: Anschlussstutzen
- 100: Dichtanordnung
- 105: Bohrung
- 106: Bohrung
- 107: Schmierölanschluss
- 108: Stichbohrung
- 109: Freiraum vor 69
- 110: Spalt zwischen 72 und 69
- 111: Radialbohrung
- 112: Innenraum in 12
- 115: Schrägbohrung
- 116: Axialbohrung
- 117: Mündung von 116
- 118: Ringraum
- 119: Axialdichtring
- 120: Axialdichtring
- 121: Elastomerdichtring
- 122: Elastomerdichtring
- 130: Elastomerdichtring
- 131: Klemmring
- 132: Bund an 99

## Patentansprüche

1. Elektromechanische Antriebseinheit, insbesondere Einzelradantriebseinheit, mit einem Elektromotor (9) mit einem Motorgehäuse (10), an dem sich ein erster externer Kühlmittelanschluss (97) und ein zweiter Kühlmittelanschluss (98) eines ersten Kühlfluidpfads zum Durchfluss eines den Elektromotor (9) kühlenden flüssigen Kühlmittels befinden, und mit einem mit dem Elektromotor (9) zusammengebauten Getriebe (11) mit einem Getriebegehäuse (12, 65, 85), in dem Zahnräder (63, 64) einer Untersetzungsstufe (60) angeordnet sind, für die eine Ölschmierung vorgesehen ist, wobei das Getriebe (11) an den Kühlfluidpfad des Elektromotors (9) angeschlossen ist,
**dadurch gekennzeichnet, dass** das Getriebe (11) einen zweiten Kühlfluidpfad aufweist, der seriell an den ersten Kühlfluidpfad angeschlossen ist, und dass sich am Getriebegehäuse (12,. 65, 85) ein weiterer externer Kühlmittelanschluss (96) und ein vierter Kühlmittelanschluss (95), über den der zweite Kühlfluidpfad an den zweiten Kühlmittelanschluss angeschlossen ist, befinden.

2. Elektromechanische Antriebseinheit nach Patentanspruch 1, wobei sich der durch den Elektromotor (9) führende Kühlfluidpfad stromauf des durch das Getriebe (11) führenden Kühlfluidpfads befindet.

3. Elektromechanische Antriebseinheit nach Patentanspruch 1 oder 2, wobei der zweite Kühlmittelanschluss (98) am Elektromotor (9) axial ausgerichtet ist, wobei auch der am Getriebe (11) vorgesehene, vierte Kühlmittelanschluss (95) axial ausgerichtet ist und wobei die beiden axial ausgerichteten Kühlmittelanschlüsse (95, 98) von Elektromotor (9) und Getriebe (11) axial ineinander steckbar sind.

4. Elektromechanische Antriebseinheit nach einem vorhergehenden Patentanspruch, wobei das Getriebegehäuse mehrteilig ein Lagerteil (65) aufweist, an dem mindestens ein Zahnrad (64) des Getriebes (11) gelagert ist, und wobei das Lagerteil (65) direkt mit dem Kühlmittel in Kontakt steht.

5. Elektromechanische Antriebseinheit nach einem vorhergehenden Patentanspruch, wobei das Getriebegehäuse mehrteilig ausgebildet ist und einen Befestigungsflansch (85) für die Befestigung von Elektromotor (9) und Getriebe (11) aneinander aufweist und wobei am Befestigungsflansch (85) der weitere externe Kühlmittelanschluss (96) und der vierte Kühlmittelanschluss (95) ausgebildet sind.

6. Elektromechanische Antriebseinheit nach den Patentansprüchen 4 und 5, wobei der zweite Kühlfluidpfad teilweise gemeinsam von dem Befestigungsflansch (85) und dem Lagerteil (65) gebildet wird.

7. Elektromechanische Antriebseinheit nach Patentanspruch 6, wobei von dem Befestigungsflansch (85) und dem Lagerteil (65) gemeinsam ein Ringkanal (83) gebildet wird, zu dem ein erster Kanal (94) offen ist, der im Befestigungsflansch (85) verläuft und den externen Kühlmittelanschluss (96) des Getriebes (11) mit dem Ringkanal (83) verbindet, und zu dem ein zweiter Kanal (93) offen ist, der im Befestigungsflansch (85) verläuft und den vierten Kühlmittelanschluss (95) mit dem Ringkanal (83) verbindet.

8. Elektromechanische Antriebseinheit nach Patentanspruch 7, wobei der zweite Kanal (93) dem ersten Kanal (94) diametral gegenüberliegenden in den Ringkanal (83) mündet.

9. Elektromechanische Antriebseinheit nach Patentanspruch 4 und nach einem der Patentansprüche 5 bis 8, wobei das mindestens eine sich am Lagerteil (65) befindliche Lager (68) für ein Zahnrad (64) über einen Schmierölpfad mit Schmieröl versorgt wird, der durch den Befestigungsflansch (85) und durch das Lagerteil (65) führt.

10. Elektromechanische Antriebseinheit nach Patentanspruch 9, wobei der Schmierölpfad einen Ringkanal (84) umfasst, der zwischen dem Befestigungsflansch (85) und dem Lagerteil (65) ausgebildet ist.

11. Elektromechanische Antriebseinheit nach Patentanspruch 10, wobei von dem Ringkanal (84) mehrere durch das Lagerteil (65) führende Stichkanäle (108) ausgehen, wobei jeder Stichkanal (108) zu einem Lager (68) von mehreren Lagern für Zahnräder (64) führt.

12. Elektromechanische Antriebseinheit nach einem oder mehreren vorhergehenden Patentansprüchen, wobei am Getriebegehäuse (12, 65, 85) ein externer Anschluss (107) für den Zufluss von Schmieröl und ein externer Anschluss (117) zum Abfließen von Schmieröl aus einem Ölsumpf vorhanden ist.

13. Elektromechanische Antriebseinheit nach einem oder mehreren vorhergehenden Patentansprüchen, wobei als Teil des Getriebegehäuses ein gestellfester Getriebeträger (12) vorhanden ist, der eine durchgehende zentrale Ausnehmung hat, wobei eine Getriebestufe (60) vorhanden ist, die innerhalb der zentralen Ausnehmung (14) des Getriebeträgers (12) angeordnet ist und eine Eingangswelle (21) mit einem außenverzahnten Zentralrad, ein drehbares Hohlrad (63) und mindestens ein sowohl mit dem Zentralrad als auch mit dem Hohlrad (63) kämmendes Zwischenrad (64), vorzugsweise mehrere Zwischenräder (64) aufweist, wobei an dem Getriebeträger (12) ein Lagerteil (65) gehalten ist, das die zentrale Ausnehmung (14) weitgehend abdeckt und Lagerzapfen (69) aufweist, auf denen die Zwischenräder (64) gelagert sind, wobei auf den Getriebeträger (12) und das Lagerteil (65) ein Befestigungsflansch (85) für den Elektromotor (9) aufgesetzt ist und wobei durch den Befestigungsflansch (85) und das Lagerteil (65) ein Schmierölpfad zur Versorgung der Lager (68) der Zwischenräder (64) mit Schmieröl und ein Kühlfluidpfad gebildet sind, der von dem vierten Kühlmittelanschluss (95) am Befestigungsflansch (85) über einen Ringkanal (83) zwischen dem Befestigungsflansch (85) und dem Lagerteil (65) zu einem externen Kühlmittelanschluss (96) am Befestigungsflansch (85) führt.
